## Europäisches Patentamt

## European Patent Office

(19)

## Office européen des brevets

(11) Veröffentlichungsnummer: **0 082 131**

**B1**

(12) # EUROPÄISCHE PATENTSCHRIFT

(45) Veröffentlichungstag der Patentschrift:
20.05.87

(21) Anmeldenummer: **82890171.0**

(22) Anmeldetag: **22.11.82**

(51) Int. Cl.⁴: **B 32 B 5/18,** A 45 C 11/20,
A 45 C 15/00, F 25 D 23/08

(54) **Flexibles, wärmeisolierendes und wärmereflektierendes, mehrlagiges Schichtmaterial.**

(30) Priorität: **11.12.81 AT 5309/81**

(43) Veröffentlichungstag der Anmeldung:
**22.06.83 Patentblatt 83/25**

(45) Bekanntmachung des Hinweises auf die Patenterteilung:
**20.05.87 Patentblatt 87/21**

(84) Benannte Vertragsstaaten:
**AT CH DE FR IT LI**

(56) Entgegenhaltungen:
**EP-A-0 038 864**
**CH-A-606 896**
**DE-B-1 081 625**
**FR-A-1 182 087**
**FR-A-1 490 794**
**FR-A-2 033 461**
**US-A-2 795 258**
**US-A-4 250 998**

(73) Patentinhaber: **Lenzing Aktiengesellschaft, A-4860 Lenzing (AT)**

(72) Erfinder: **Reinmüller, Reinhard, Dipl.- Ing., Stelzhamerstrasse 2/1, A-4850 Timelkam (AT)**
Erfinder: **Hoflehner, Helmut, Europahof 9, A-4840 Vöcklabruck (AT)**

(74) Vertreter: **Wolfram, Gustav, Dipl.- Ing., Schwindgasse 7 P.O. Box 205, A-1041 Wien (AT)**

EP 0 082 131 B1

**Beschreibung**

Die Erfindung betrifft ein flexibles, wärmeisolierendes und wärmereflektierendes, mehrlagiges Schichtmaterial sowie Kühlbehälter aus diesem Schichtmaterial.

Es ist bekannt, die Wände von Behältern, beispielsweise von Kühltaschen, aus mehreren flexiblen Schichten zu fertigen, wobei wenigstens eine Schicht aus Weichschaumstoff besteht. Die einzelnen Schichten sind dabei nur in ihrem Randbereich durch Abnähen und Konfektionieren miteinander verbunden. Behälter, deren Wände den beschriebenen mehrschichtigen Aufbau aufweisen, haben nur geringe Formstabilität; ein solches wärmeisolierendes Material aus mehreren Schichten hat für viele Anwendungsfälle ungenügende mechanische Festigkeitswerte.

In der DE-A-24 30 785 ist zum Verpacken von Nahrungsmitteln ein Schichtmaterial mit mindestens einer Metallschicht und mindestens einer Kunststoffschicht beschrieben, wobei die Kunststoffschicht als Gewebe ausgebildet ist. Ein solches Schichtmaterial ist wenig anfällig gegen Mikrorißbildung, hinreichende Wärmeisolation ist damit jedoch nicht erzielbar.

Die FR-A-2 033 461 beschäftigt sich mit einem wärmeisolierenden Material aus einem Träger, mit dem eine dünne Folie verbunden ist, die auf ihrer anderen Seite eine reflektierende Metallschicht aufweist, welch letztere mit einer für Wärmestrahlung durchlässigen Schutzschicht versehen ist. Die Schutzschicht besteht vorzugsweise aus einem Polyester und wird mittels eines Lackierverfahrens auf die Metallschicht aufgebracht. Die dünne Folie aus synthetischem Harz oder aus wärmebeständigem Kunststoffmaterial nach der FR-A besteht vorzugsweise aus temperaturbeständigem Polyester auf Basis Phthalsäure. Vom wärmeisolierenden Träger, welcher aus einer Bahn oder einer Platte aus synthetischem Schaumstoff, vorzugsweise auf Polyurethan-Basis, besteht, wird lediglich ausgesagt, daß er mit Verstärkungen in Form von Textilprodukten versehen sein kann. Bezüglich der Anordnung einer solchen Verstärkung, nämlich ob sie sich zwischen den Schichten oder in der Trägerschicht befindet, werden keine Angaben gemacht.

Die Erfindung stellt sich die Aufgabe, ein gut verarbeitbares, widerstandsfähiges und doch flexibles Material mit sehr guten wärmeisolierenden Eigenschaften zu schaffen.

Die gestellte Aufgabe wird mit einem eingangs erwähnten Schichtmaterial gelöst, welches erfindungsgemäß nacheinander ausfolgenden, jeweils vollflächig miteinander verbundenen Lagen aufgebaut ist:
- einer flexiblen Polyäthylenschicht mit einem Flächengewicht von 20 bis 60 g/m$^2$
- einer Schaumstoffschicht mit einer Stärke von 2 bis 5 mm
- einer Verbindungsschicht aus Polyäthylen mit einem Flächengewicht von 20 bis 60 g/m$^2$,
- einem Verstärkungsgewebe aus Natur- oder Kunstfasern wie Baumwolle oder Polyolefinbändchen,
- einer Verbindungsschicht aus Polyäthylen mit einem Flächengewicht von 20 bis 60 g/m$^2$, und
- einer Deckschicht aus metallisiertem, flexiblem Kunststoff, vorzugsweise einer aluminisierten Polyesterdeckschicht von 10 bis 20 g/m$^2$ mit einer Stärke des Aluminiumfilms in der Größenordnung von 0,01 bis 0,1 µm, wobei die metallisierte Seite der Deckschicht der Verbindungsschicht zugewendet ist.

Die Deckschicht besteht insbesondere aus einer aluminisierten Polyesterfolie, die durch Aufdampfen des Aluminiums auf die Folie gebildet ist.

Das hohe Reflexionsvermögen einer aluminisierten Folie im infraroten Wellenlängenbereich verhindert weitgehend, daß eingestrahlte Wärme absorbiert wird.

Der Wärmedurchgang durch das Verbundmaterial wird schließlich durch eine Schaumstoffschicht, welche eine sehr niedere Wärmeleitzahl aufweist, wesentlich herabgesetzt. Ein weiterer wesentlicher Teil des Verbundmaterials, das Verstärkungsgewebe, welches aus Polyolefinbändchen oder Baumwolle besteht, hat die Aufgabe, dem Verbundmaterial Festigkeit zu verleihen, sodaß eine Konfektionierung der Box durch Nähen möglich wird, ohne daß es zu einem Ausbrechen oder Abschneiden des Materials durch den Nähfaden kommt. Da das Gewebe vom Schaumstoff aus gesehen außen liegt, wird der Kühlbox ein zusätzlicher mechanischer Schutz vor Beschädigungen aller Art verliehen.

Durch die innere Schicht aus flexiblem Polyäthylen wird der Schaumstoff vor Beschädigungen geschützt und eine geschlossene und glatte Oberfläche erzielt.

Die einzelnen Lagen des erfindungsgemäßen Verbundmaterials sind durch Schichten aus Polyäthylen miteinander verbunden, welche vorzugsweise durch Extrusionslaminierung aufgebracht werden, doch können auch andere bekannte Kaschiermethoden angewandt werden.

Ein solches Verbundmaterial gestattet darüber hinaus auf einfache Weise seine spiegelbildlich doppellagige Verarbeitung mit außen liegenden Deckschichten, u.zw. sogar in Längenabmessungen, welche unter einem Zentimeter liegen können.

Das erfindungsgemäße Verbundmaterial ist mit Vorteil für eine Kühlbox zur Aufbewahrung von in Endbehältern abgefüllten hitzeempfindlichen Medikamenten mit wärmeisolierenden Wandteilen und einem Kühlakkumulator verwendbar.

Hitzeempfindliche Medikamente, die einerseits gekühlt aufbewahrt werden sollen, andererseits dem Patienten oder einem Einsatzarzt jederzeit zur Verfügung stehen sollen, sind z.B. Insulin und Blutplasmaderivate. Diese Medikamente müssen auf Külschranktemperatur gehalten werden, was bei längerer Abwesenheit, beispielsweise auf Reisen, Schwierigkeiten mit sich bringt, die bisher nicht zufriedenstellend gelöst sind.

Bei einer bekannten Kühltasche, deren Wände mit Hartschaumstoff (Styropor) isoliert sind, sind zwei Kühlakkumulatoren längs der Innenseiten der Wände angeordnet. In dem Raum zwischen den Kühlakkumulatoren sind die Medikamenten-Behälter in Aufnahmebohrungen einer Mittelleiste befestigbar. Bei dieser Kühltasche sind somit die Kühlakkumulatoren und die Medikamenten-Behälter in unmittelbarer Nähe bzw. in Berührung, was einerseits den Nachteil hat, daß flüssige Medikamente in den Behältern zu Beginn der Aufbewahrungszeit einfrieren, anderseits, daß nach Öffnen der Kühltasche eine rasche Aufwärmung erfolgt. Es war bisher nicht möglich, in diesen Behältern Medikamente bei etwa 0 bis 4°C während mehrerer Stunden zu halten. Ein weiterer Nachteil der bekannten Kühltasche liegt in der Bruchempfindlichkeit der für die Wände verwendeten Hartschaumstoffe.

Eine weitere Aufgabe der Erfindung besteht somit darin, einen Behälter zu schaffen, welcher verbesserte Gebrauchseigenschaften, Haltbarkeit, Festigkeit, Wärmedämmung u.a. besitzt, welcher die Kühlhaltung von Medikamenten über einen längeren Zeitraum, z.B. von wenigstens 10 Stunden gewährleistet, ohne daß die in den Endbehältern enthaltenen Medikamente einfrieren bzw. beim Öffnen wesentlichen Temperaturunterschieden unterworfen werden.

Diese Aufgabe wird mit einer Kühlbox der voranstehend beschriebenen Art erfindungsgemäß dadurch gelöst, daß die Kühlbox zwei voneinander durch eine wärmeleitende Innenwand getrennte Abteilungen aufweist, wobei in der einen Abteilung der Kühlakkumulator und in der anderen Abteilung ein Ausnehmungen aufweisender Weichschaumstoffblock, in dessen Ausnehmungen die Medikamenten-Endbehälter einsetzbar sind, enthalten sind, und daß die Außenwände der Kühlbox aus dem erfindungsgemäßen Verbundmaterial bestehen.

Die Kühlbox kann für den Transport von Insulin so dimensioniert sein, daß ein Vorrat darin Platz findet, welcher dem Bedarf eines Diabetikers für etwa 14 Tage entspricht.

Die Medikamenten-Endbehälter sind stoßsicher, zusätzlich wärmeisoliert und leicht entnehmbar in den Ausnehmungen des Schaumstoffblockes untergebracht, wobei Weichschaumstoffblöcke mit Ausnehmungen verschiedener Dimension, welche Ausnehmungen jeweils der Geometrie der unterzubringenden Fläschchen, Behälter od.dgl. entsprechen, leicht gegeneinander auswechselbar sind.

Die Wirkung der Kühlbox basiert einerseits auf dem großen Wärmeinhalt der Kühlakkus, d.h. deren Fähigkeit, eine der Kühlflüssigkeit und der Temperaturdifferenz entsprechende Wärmemenge aus der Umgebung aufzunehmen,

und anderseits auf dem guten Isolationsverhalten des erfindungsgemäßen Verbundmaterials, aus welchem die Außenwände der Kühlbox gefertigt sind. Ein Kühlakku ist in seiner Wirkungsweise bekannt und in vielen Ausführungsformen erhältlich.

Nach einer bevorzugten Ausführungsform bestehen die Außenwände der Kühlbox aus einer spiegelbildlichen Doppellage des erfindungsgemäßen Verbundmaterials, wodurch bewirkt wird, daß - da die metallisierte Folie auch an der Innenseite der Kühlbox zu liegen kommt - wegen der geringen Emissionswerte auch kaum Strahlungswärme nach innen abgegeben wird.

Die wärmeleitende Innenwand besteht zweckmäßig aus einem flexiblen Verbundstoff mit einer Wärmeleitzahl von 0,02 bis 0,06 W/m.K bei einer Schichtdicke von 3 bis 5 mm, insbesondere aus einem solchen aus folgenden Lagen:
- einer Polyäthylenschicht von 20 bis 60 g/m$^2$,
- einem Gewebe aus Kunst- oder Naturfasern, vorzugsweise aus Polyolefinbändchen,
- einem Schaumstoff,
- einem Gewebe aus Kunst- oder Naturfasern, vorzugsweise aus Polyolefinbändchen, sowie
- aus einer Polyäthylenschicht von 20 bis 60 g/m$^2$.

Die wärmeleitende Innenwand bremst zwar den Wärmedurchgang zwischen den beiden Abteilungen der Kühlbox, um eine zu starke Kühlung der Medikamenten-Endbehälter zu vermeiden, ihre Wärmeleitzahl - welche vor allem von der Dicke des im flexiblen Verbundstoff enthaltenen Schaumstoffes abhängt - muß jedoch größer sein als jene des Außenwand-Verbundmaterials der Kühlbox, damit der Wärmefluß in Summe dennoch im wesentlichen von der den Weichschaumstoffblock aufnehmenden Abteilung durch die wärmeleitende Innenwand in die den Kühlakku enthaltende Abteilung erfolgt. Den beiden Gewebelagen fällt die Aufgabe der Festigkeits- und Steifigkeitserhöhung der Innenwand zu.

Die Unterbringung der Medikamente in der einen Abteilung der Kühlbox und des Kühlakkus in der zweiten Abteilung gewährleistet überdies die rutsch- und stoßsichere Verpackung der Medikamente. Schließlich wird auch eine mögliche Kontamination bei Bruch oder unbeabsichtigter Öffnung entweder des Medikamenten-Endbehälters oder des Kühlakkus sicher vermieden. Beim Öffnen der Abteilung zur Entnahme der Medikamente findet infolge des gebremsten Wärmedurchganges durch die wärmeleitende Innenwand keine wesentlich erhöhte Wärmezufuhr zum Kühlakku statt.

Die den Schaumstoffblock aufnehmende Abteilung weist vorzugsweise einen mittels Reißverschluß schließbaren Deckel auf, wobei das Scharnier zwischen Deckel und Seitenwand ebenfalls aus dem erfindungsgemäßen wärmeisolierenden und wärmereflektierenden Verbundmaterial besteht. Durch diese Maßnahme wird der erhöhte Wärmefluß durch die Reißverschlüsse selbst auf ein Mindestmaß beschränkt.

Nach einer bevorzugten Ausführungsform sind die Ränder der Wände vernäht und die Ränder der Außenwände sind mit einem Reiterband abgedeckt. Mittels des Reiterbandes wird eine Beschädigung der freiliegenden Ränder sowie ein unerwünschtes und unansehnliches Auseinanderklaffen der durchschnittenen Lagen des Verbundmaterials vermieden.

Nach einer weiteren vorteilhaften Ausführungsform der Kühlbox ist die Abteilung für den Kühlakkumulator durch einen mittels Reißverschluß verschließbaren Schlitz zugänglich.

Das erfindungsgemäße Verbundmaterial ist weiters vorteilhaft auch für einen an sich bekannten, zwei drehbar miteinander verbundene Metallrahmen und eine Bespannung aufweisenden Klapphocker und eine daran zu befestigende Kühltasche verwendbar.

Erfindungsgemäß bestehen die Bespannung des Hockers und die Wände der Kühltasche aus einem erfindungsgemäßen Verbundmaterial an zwei einander gegenüberliegenden Seiten der Bespannung sind Befestigungsmittel vorgesehen, welche mit Halterungen zusammenwirken, die an einander gegenüberliegenden Seitenwandteilen der Kühltasche angebracht sind, und ist im oberen Bereich der Seitenwände der Kühltasche wenigstens eine verschließbare Öffnung vorgesehen.

Nach einer bevorzugten Ausführungsform der Kühltasche sind an den Seitenwänden zusätzlich Einhängevorrichtungen angebracht, welche mit einem Traggurt verbindbar sind.

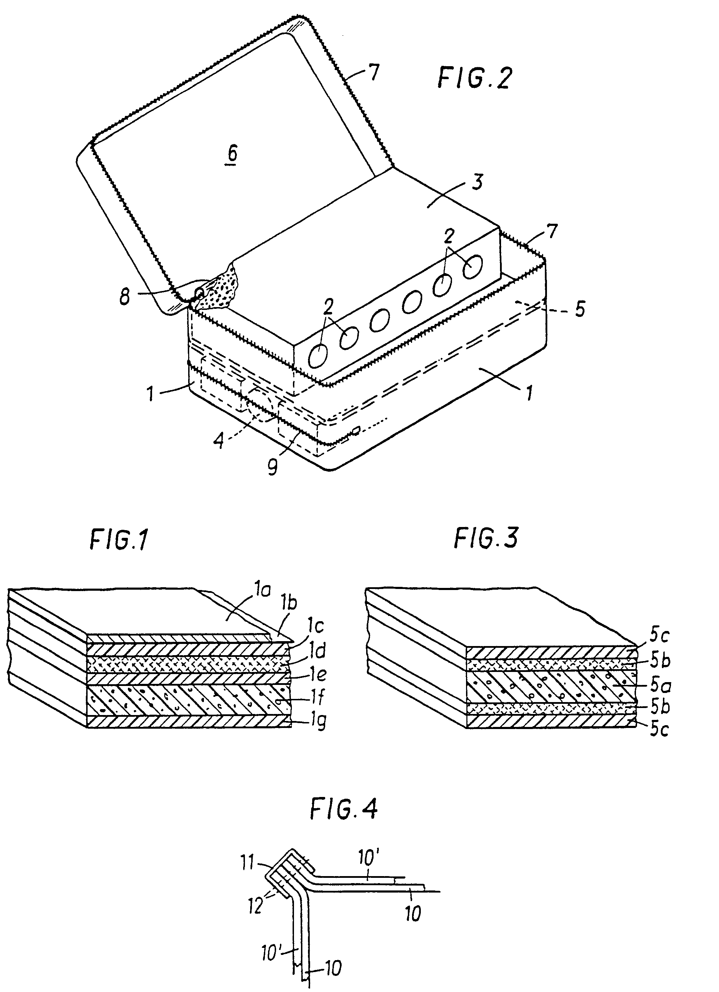

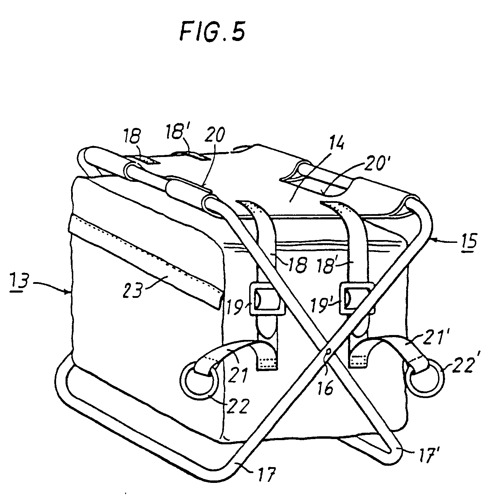

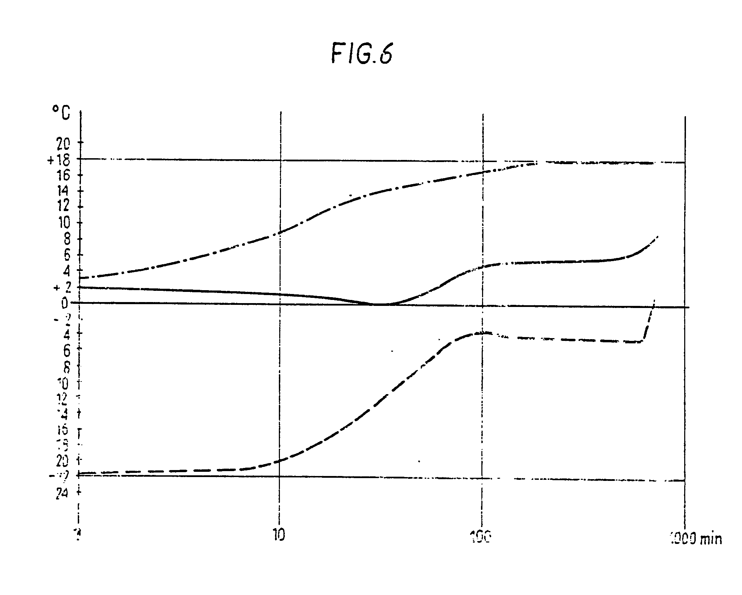

Die Erfindung ist in der Zeichnung anhand bevorzugter Ausführungsformen veranschaulicht und in Verbindung mit einem Beispiel näher erläutert. Fig. 1 zeigt schematisch und hinsichtlich der Dicke überhöht dargestellt ein erfindungsgemäßes Verbundmaterial, Fig. 2 ist eine schematische, perspektivische Darstellung einer Kühlbox, deren zur Aufnahme des Weichschaumstoffblockes vorgesehene Abteilung geöffnet ist. Fig. 3 zeigt in analoger Darstellungsweise wie in Fig. 1 einen Verbundstoff, aus welchem vorteilhaft die wärmeleitende Innenwand der Kühlbox gefertigt ist. In Fig. 4 ist ein Ausschnitt aus dem Randbereich miteinander verbundener Außenwände der Kühlbox in vereinfachter Darstellung gezeigt. Fig. 5 stellt schematisch eine unter der Sitzfläche eines Klapphockers angebrachte Kühltasche dar. Fig. 6 ist ein Zeit/Temperatur-Diagramm, welches im nachstehenden Beispiel erklärt wird.

Das Verbundmaterial besteht gemäß Fig. 1 aus einer Polyesterschicht 1a, an die sich eine aufgedampfte dünne Aluminiumschicht 1b anschließt, welche vollflächig mittels einer Verbindungsschicht 1c, beispielsweise aus Polyäthylen, an einem Verstärkungsgewebe 1d haftet. Eine weitere Verbindungsschicht 1e, vorzugsweise aus Polyäthylen, verbindet das Verstärkungsgewebe 1d mit der Schaumstoffschicht 1f, welche mit einer weiteren Schicht 1g aus flexibler Folie, vorzugsweise Polyäthylen, verbunden ist.

Die Zwischenschichten aus Polyäthylen können besonders vorteilhaft mittels Extrusionslaminierung aufgebracht sein, bei welcher Technik die zu verbindenden Flachmaterialien gemeinsam durch ein Walzenpaar geführt werden und gleichzeitig einlaufseitig die Verbindungsschicht durch Extrusion zwischen die Flachmaterialien eingebracht wird.

In Fig. 2 sind die aus dem erfindungsgemäßen Verbundmaterial bestehenden Außenwände der Kühlbox, welche sowohl die Abteilung mit dem Ausnehmungen, z.B. Bohrungen 2, aufweisenden Weichschaumstoffblock 3 als auch die Abteilung, welche den strichliert und nicht zur Gänze eingezeichneten Kühlakku 4 enthält, umschließen, mit 1 bezeichnet. Die Verbindungsstellen der wärmeleitenden Innenwand 5 mit der Außenwand 1 sind ebenfalls strichliert und nur über einen Teil des Umfanges dargestellt. Die Innenwand 5 trennt die beiden Abteilungen voneinander. Die den Schaumstoffblock 3 enthaltende Abteilung weist einen mittels Reißverschluß 7 schließbaren Deckel 6 auf, dessen teilweise sichtbares Scharnier 8 ebenfalls aus dem Außenwand-Verbundmaterial besteht.

Die Abteilung für den Kühlakku 4 weist einen mittels des Reißverschlusses 9 verschließbaren Schlitz auf.

Eine bevorzugte Schichtabfolge für die wärmeleitende Innenwand der Kühlbox gemäß Fig. 3 umfaßt eine zentrale Lage 5a aus Schaumstoff, an welche sich symmetrisch beiderseits eine Gewebelage 5b aus Kunst- oder Naturfasern, vorzugsweise aus Polyolefinbändchen, anschließt. Als Außenschichten folgen auf beiden Seiten des Verbundstoffes flexible Kunststoffschichten 5c, vorzugsweise wieder aus Polyäthylen.

Die Herstellung des Verbundstoffes für die Innenwand kann analog zur Herstellung des erfindungsgemäßen Verbundmaterials für die Außenwand erfolgen.

In Fig. 4 ist der Randbereich miteinander verbundener Außenwände senkrecht zu einer Kante der Kühlbox geschnitten gezeigt. Die Außenwände bestehen aus einer spiegelbildlichen Doppellage 10, 10' des Verbundmaterials, wobei sich die Deckschicht des Verbundmaterials aus flexiblem metallisiertem Kunststoff auf den voneinander abgewendeten Seiten der beiden Lagen befindet. Die frei abstehenden Ränder der Wände sind mit einem Reiterband 11 abgedeckt und miteinander sowie mit dem Reiterband durch die Naht 12 verbunden.

Zur Ingebrauchnahme der Kühlbox geht man wie folgt vor: Ein handelsüblicher Kühlakku wird zunächst über einen entsprechend langen Zeitraum. z.B. über Nacht, in das Tiefkühlfach eines Kühlschrankes oder in eine Tiefkühltruhe gegeben und damit auf Tiefkühltemperatur gebracht. Vor Antritt einer Reise wird der Kühlakku aus dem Tiefkühlfach oder de Kühltruhe entnommen und nach Öffnen des Reißverschlusses 9 durch den vorgesehenen Schlitz in die entsprechende Abteilung der Kühlbox geschoben, worauf der Reißverschluß 9 wieder geschlossen wird. Das auf Kühlschranktemperatur gehaltene Medikament wird in die dafür vorgesehenen Ausnehmungen 2 des Schaumstoffblockes 3 gesteckt und der Block wird sodann in die zweite Abteilung der Kühlbox eingesetzt. Auch der Deckel 6 dieser Abteilung wird sodann mit dem vorgesehenen Reißverschluß 7 geschlossen. Die gefüllte Kühlbox ist damit reisefertig. Bei Bedarf wird ein Medikament der Tasche entnommen. Nach Reiseende wird der Kühlakku aus seiner Abteilung entnommen und wieder in ein Tiefkühlfach gestellt; die Medikamentenkühlbox kann einschließlich noch darin befindlicher Medikamente im Kühlschrank gelagert werden.

Die in Fig. 5 gezeigte quaderförmige Kühltasche ist allgemein mit 13 bezeichnet. Sie besteht wie die Bespannung 14 des Klapphockers 15 aus dem erfindungsgemäßen Verbundmaterial. Die Bespannung 14 ist an den beiden mittels Stiften 16 drehbar miteinander verbundenen Metallrahmen 17, 17' befestigt. Bei der dargestellten Ausführungsform sind an zwei einander gegenüberliegenden Seiten der Bespannung 14 je zwei Gurte 18, 18' als Befestigungsmittel vorgesehen, welche durch je zwei an einander gegenüberliegenden Seitenwandteilen der Kühltasche 13 angebrachte Schnallen 19, 19' geführt sind und von diesen festgehalten werden. Die Bespannung 14 ist an den Metallrahmen 17, 17' nur längs eines Teiles der zueinander parallelen Rahmenabschnitte durch Vernähen befestigt. Im mittleren Bereich dieser parallelen Abschnitte weist die Bespannung 14 je eine Aussparung 20, 20' auf, so daß der Hocker im zusammengeklappten Zustand Griffstellen in Form freiliegender Rahmenteile aufweist. Die nicht von der Bespannung umschlungenen Griffstellen können überdies mit einem Kunststoff überzogen sein.

An den gleichen Stellen der Seitenwände, wo die Schnallen 19, 19' angebracht sind, sind Riemenstücke 21, 21', welche an ihren Enden je einen Ring 22, 22' tragen und als Einhängevorrichtungen dienen, befestigt. Eine verschließbare Öffnung in der Kühltasche 13 ist von ner Klappe 23 überdeckt.

Wie aus Fig. 5 ersichtlich ist, wird die Kühltasche 13 unter dem Hocker 15 angebracht, so daß die Kühltasche dem Benützer im Sitzen zugänglich ist. Die Tasche erlaubt die Aufbewahrung von Proviant und Getränken, welche durch das Isoliervermögen des erfindungsgemäßen Verbundmaterials vor hohen Außentemperaturen geschützt sind. Das Verbundmaterial als Hockerbespannung trägt auch zur Erhöhung des Sitzkomforts bei, da die Schaumstoffschicht polsternd wirkt. Hocker und Tasche können gemeinsam transportiert werden, indem ein Traggurt - beispielsweise mittels Karabinern - mit den Ringen 22, 22' und mit den korrespondierenden Einhängevorrichtungen an der gegenüberliegenden Seitenwand der Kühltasche verbunden wird. Es ist natürlich auch möglich, die Tasche abzuschnallen und so die Tasche für sich am Traggurt und den Hocker zusammengeklappt an vorgesehenen Griffstellen zu tragen. Die Grundfläche der Tasche entspricht etwa der Sitzfläche des Hocker und in der Höhe ist die Tasche etwas niedriger gehalten als das aufgeklappte Hockergestell.

Die von der Klappe 23 überdeckte Öffnung kann beispielsweise mit einem Reißverschluß versehen sein; sie ist auch im Sitzen vom Hocker aus gut zugänglich. Die Klappe aus Verbundmaterial unterbindet erhöhte Wärmezufuhr durch den Reißverschluß. An der Unterseite der Bespannung 14 können Verstärkungsgurte vorgesehen sein.

Die freiliegenden Ränder des Verbundmaterials können auch bei der Kühltasche 13 und der Bespannung 14 mit einem Reiterband abgedeckt sein, wie schon unter Bezugnahme auf Fig. 4 erklärt wurde.

**Beispiel**

Ein Medikamentenfläschchen, welches 10 ml Depot-Insulin CR enthält, sowie ein Kühlakku wurden wie weiter oben beschrieben in eine erfindungsgemäße Kühlbox der in Fig. 2 dargestellten bevorzugten Ausführungsform, deren Außenwände aus dem erfindungsgemäßen 4-lagigen Verbundmaterial mit den beiden Verbindungsschichten aus Polyäthylen und deren wärmeleitende Innenwand aus dem flexiblen Verbundstoff gemäß Fig. 3 bestanden, gebracht. Die Anfangstemperatur des Kühlakkus betrug -21,8°C, die Anfangstemperatur des Insulins +2°C. Bei einer Raumtemperatur von 17 bis 20°C erreichte das Insulin erst nach Ablauf von 12 h 50 min eine Temperatur von 8°C, wohingegen das Insulin in einem außerhalb der Kühlbox in selben Raum frei stehenden Fläschchen der gleichen Art die Temperatur von 8°C bereits nach 8 min erreicht hatte.

In Fig. 6 ist der Temperaturverlauf des Kühlmittels im Kühlakku und des Insulins im Medikamentenfläschchen in Abhängigkeit von der Aufbewahrungszeit in der Kühlbox dargestellt, wobei der Temperaturverlauf des Kühlmittels strichliert und jener des Insulins voll ausgezogen eingetragen ist. Zum Vergleich ist strichpunktiert auch der Temperaturverlauf in einem frei stehenden Medikamentenfläschchen eingetragen.

Aus dem Beispiel und Fig. 6 geht hervor, daß der Inhalt des Medikamentenfläschchens in der erfindungsgemäßen Kühlbox außerordentlich lange Zeit auf einer Temperatur unterhalb 8°C gehalten werden kann. Andererseits sinkt die Temperatur der kühlgehaltenen Flüssigkeit nie unter 0°C. Zu keinem Zeitpunkt besteht somit die Gefahr des Einfrierens.

**Patentansprüche**

1. Flexibles, wärmeisolierendes und wärmereflektierendes, mehrlagiges Schichtmaterial, dadurch gekennzeichnet, daß es nacheinander aus folgenden, jeweils vollflächig miteinander verbundenen Lagen aufgebaut ist:
   - einer flexiblen Polyäthylenschicht mit einem Flächengewicht von 20 bis 60 g/m² (1g),
   - einer Schaumstoffschicht mit einer Stärke von 2 bis 5 mm (1f),
   - einer Verbindungsschicht (1e) aus Polyäthylen mit einem Flächengewicht von 20 bis 60 g/m²,
   - einem Verstärkungsgewebe aus Natur- oder Kunstfasern wie Baumwolle oder Polyolefinbändchen (1d),
   - einer Verbindungsschicht (1c) aus Polyäthylen mit einem Flächengewicht von 20 bis 60 g/m², und
   - einer Deckschicht aus metallisiertem, flexiblem Kunststoff, vorzugsweise einer aluminisierten Polyesterdeckschicht (1a) von 10 bis 20 g/m² mit einer Stärke des Aluminiumfilms (1b) in der Größenordnung von 0,01 bis 0,1 μm, wobei die metallisierte Seite der Deckschicht der Verbindungsschicht (1c) zugewendet ist.

2. Verbundmaterial nach Anspruch 1, dadurch gekennzeichnet, daß die Deckschicht (1a, 1b) aus einer aluminisierten Polyesterfolie besteht, die durch Aufdampfen des Aluminiums auf die Folie gebildet ist.

3. Kühlbox zur Aufbewahrung von in Endbehältern abgefüllten hitzeempfindlichen Medikamenten, mit wärmeisolierenden Wandteilen und einem Kühlakkumulator (4), unter Verwendung eines Verbundmaterials nach den Ansprüchen 1 und 2, dadurch gekennzeichnet, daß die Kühlbox zwei voneinander durch eine wärmeleitende Innenwand (5) getrennte Abteilungen aufweist, wobei in der einen Abteilung der Kühlakkumulator (4) und in der anderen Abteilung ein Ausnehmungen (2) aufweisender Weichschaumstoffblock (3), in dessen Ausnehmungen (2) die Medikamenten-Endbehälter einsetzbar sind, enthalten sind, und daß die Außenwände (1) der Kühlbox aus dem Verbundmaterial bestehen.

4. Kühlbox nach Anspruch 3, dadurch gekennzeichnet, daß die Außenwände (1) der Kühlbox aus einer spiegelbildlichen Doppellage des Verbundmaterials bestehen.

5. Kühlbox nach Anspruch 3, dadurch gekennzeichnet, daß die wärmeleitende Innenwand (5) aus einem flexiblen Verbundstoff mit einer Wärmeleitzahl von 0,02 bis 0,06 W/m.K bei einer Schichtdicke von 3 bis 5 mm besteht.

6. Kühlbox nach den Ansprüchen 3 und 5, dadurch gekennzeichnet, daß die wärmeleitende Innenwand (5) aus einem flexiblen Verbundstoff aus folgenden Lagen besteht:
   - einer Polyäthylenschicht mit einem Flächengewicht von 20 bis 60 g/m² (5c),
   - einem Gewebe aus Kunst- oder Naturfasern, vorzugsweise aus Polyolefinbändchen (5b),
   - einem Schaumstoff (5a),
   - einem Gewebe aus Kunst- oder Naturfasern, vorzugsweise aus Polyolefinbändchen (5b), sowie
   - aus einer Polyäthylenschicht mit einem Flächengewicht von 20 bis 60 g/m² (5c).

7. Kühlbox nach den Ansprüchen 3 bis 6, dadurch gekennzeichnet, daß die den Schaumstoffblock (3) aufnehmende Abteilung einen mittels Reißverschluß (7) schließbaren Deckel (6) aufweist, wobei das Scharnier (8) zwischen Deckel (6) und Seitenwand ebenfalls aus dem wärmeisolierenden und wärmereflektierenden Außenwand-Verbundmaterial besteht.

8. Kühlbox nach den Ansprüchen 3 bis 7, dadurch gekennzeichnet, daß die Ränder der Wände vernäht und die Ränder der Außenwände (1) mit einem Reiterband (11) abgedeckt sind.

9. Kühlbox nach den Ansprüchen 3 bis 8, dadurch gekennzeichnet, daß die Abteilung für den Kühlakkumulator (4) durch einen mittels Reißverschluß (9) verschließbaren Schlitz zugänglich ist.

10. Kühltasche (13) für einen zwei drehbar miteinander verbundene Metallrahmen (17, 17') und eine Bespannung (14) aufweisenden Klapphocker (15), dadurch gekennzeichnet, daß die Bespannung (14) des Hockers (15) und die Wände der Kühltasche (13) aus einem Verbundmaterial (1) nach Anspruch 1 oder 2 bestehen, daß an zwei einander gegenüberliegenden Seiten der Bespannung Befestigungsmittel (18, 18') vorgesehen sind, welche mit Halterungen (19, 19') zusammenwirken, die an einander gegenüberliegenden Seitenwandteilen der Kühltasche angebracht sind, und daß im oberen Bereich der Seitenwände der Kühltasche (13) wenigstens eine verschließbare Öffnung vorgesehen ist.

11. Kühltasche nach Anspruch 10, dadurch gekennzeichnet, daß an den Seitenwänden zusätzlich Einhängevorrichtungen (21, 22, 21', 22') angebracht sind, welche mit einem Traggurt verbindbar sind.

**Revendications**

1. Matériau stratifié multicouche souple, isolant à la chaleur et réfléchissant la chaleur, caractérisé en ce qu'il est successivement formé des couches suivantes, chaque fois reliées l'une à l'autre sur toute leur surface;
   - une couche de polyéthylène souple d'une densité de surface de 20 à 60 g/m² (1g),
   - une couche de matériau mousse d'une épaisseur de 2 à 5 mm (1f),

- une couche de liaison (1e) en polyéthylène d'une densité de surface de 20 à 60 g/m², 

- un tissu d'armature en fibres naturelles ou synthétiques comme du coton ou des rubans de polyoléfine (1d),

- une couche de liaison (1c) en polyéthylène d'une densité de surface de 20 à 60 g/m², et

- une couche de couverture en matériau souple métallisé, de préférence une couche de couverture en polyester aluminisé (1a) de 10 à 20 g/m² avec une épaisseur du film d'aluminium (1b) de l'ordre de grandeur de 0,01 à 0,1 micron, la face métallisé de la couche de couverture étant tournée vers la couche de liaison (1c).

2. Matériau composite selon la revendication 1, caractérisé en ce que la couche de couverture (1a, 1b) est constituée d'une feuille de polyester aluminisée formée par vaporisation de l'aluminium sur la feuille.

3. Boite refroidissante pour la conservation de médicaments sensibles à la chaleur et contenus dans des emballages commerciaux, comportant des parties de paroi isolantes à la chaleur et un accumulateur de froid (4), avec utilisation d'un matériau composite selon les revendications 1 et 2, caractérisée en ce que la boite refroidissante présente deux compartiments séparés l'un de l'autre par une paroi intérieure conductrice de la chaleur (5), étant précisé que dans l'un des compartiments est contenu l'accumulateur de froid (4) et que dans l'autre compartiment est contenu un bloc de matériau mousse tendre (3) qui présente des évidements (2) dans lesquels on peut placer les emballages commerciaux et les médicaments; et en ce que les parois extérieures (1) de la boite refroidissante sont constituées du matériau composite.

4. Boite refroidissante selon la revendication 3, caractérisée en ce que les parois extérieures (1) de la boite refroidissante sont constituées d'une double couche, symétrique, du matériau composite.

5. Boite refroidissante selon la revendication 3, caractérisée en ce que la paroi intérieure conductrice de la chaleur (5) est constituée d'un matériau composite souple d'un coefficient de conductibilité calorifique de 0,02 à 0,06 W/m.K pour une épaisseur de couche de 3 à 5 mm.

6. Boite refroidissante selon la revendication 3 et 5, caractérisée en ce que la paroi intérieure conductrice de la chaleur (5) est constituée d'un matériau composite souple composé des couches suivantes:

- une couche de polyéthylène d'une densité de surface de 20 à 60 g/m² (5c),

- un tissu de fibres synthétiques ou naturelles, de préférence de rubans de polyoléfine (5b)

- un matériau mousse (5a),

- un tissu de fibres synthétiques ou naturelles, de préférence de rubans de polyoléfine (5b), ainsi que

- une couche de polyéthylène d'une densité de surface de 20 à 60 g/m² (5c)

7. Boite refroidissante selon les revendications 3 à 6, caractérisée en ce que le compartiment qui reçoit le bloc de matériau mousse (3) présente un couvercle (6) que l'on peut fermer au moyen d'une fermeture à glissière (7), la charnière (8) située entre le couvercle (6) et la paroi latérale étant constituée du matériau composite de la paroi extérieure, isolant à la chaleur et réfléchissant la chaleur.

8. Boite refroidissante selon les revendications 3 à 7, caractérisée en ce que les bords des parois sont cousues; et en ce que les bords des parois extérieures (1) sont recouvertes d'une bande placée à cheval (11).

9. Boite refroidissante selon les revendications 3 à 8, caractérisée en ce que le compartiment pour l'accumulateur de froid (4) est accessible par une fente obturable au moyen d'une fermeture à glissière (9).

10. Sac refroidissant (13) pour un tabouret pliant (15) qui présente deux cadres métalliques (17, 17') reliés l'un à l'autre avec possibilité de rotation et un entoilage (14), caractérisé en ce que l'entoilage (14) du tabouret (15) et les parois du sac refroidissant (13) sont constitués d'un matériau composite (1) selon la revendication 1 ou 2; en ce que sur deux côtés, opposés l'un à l'autre, de l'entoilage sont prévus des moyens de fixation (18, 18') qui collaborent avec des attaches (19, 19') rapportées sur les parties de parois latérales opposées l'une à l'autre du sac refroidissant; et en ce que dans la zone supérieure des parois latérales du sac refroidissant (13) est prévue au moins une ouverture obturable.

11. Sac refroidissant selon la revendication 10, caractérisé en ce que sur les parois latérales sont en outre rapportés des dispositifs de suspension que l'on peut relier par une courroie.

**Claims**

1. Flexible heat-insulating and heat-reflecting multilayer laminated material, characterised in that it is consecutively composed of the following layers connected with each other on their entire surfaces:

- a flexible polyethylene layer having an area weight of from 20 to 60 g/m² (1g),

- a foamed material layer having a thickness of from 2 to 5 mm (1f),

- a connecting layer (1e) of polyethylene having an area weight of from 20 to 60 g/m²,

- a reinforcement tissue of natural or synthetic fibres, such as cotton or polyolefine ribbons (1d),

- a connecting layer (1c) of polyethylene having an area weight of from 20 to 60 g/m², and

- a covering layer of metallized flexible synthetic material, preferably of an aluminized polyester covering layer (1a) of from 10 to 20 g/m² with a thickness of the aluminium film (1b) in the range between 0.01 and 0.1 μm, the metallized side of the covering layer facing the connecting layer (1c).

2. A composite material according to claim 1, characterised in that the covering layer (1a, 1b) is comprised of an aluminized polyester foil formed by evaporation of the aluminium onto the foil.

3. A cooling box for storing heat-sensible medicines filled in final containers, comprising heat-insulating wall parts and a cooling accumulator (4), by using a composite material according to claims 1 and 2, characterised in that the cooling box comprises two compartments separated from each other by a heat-conducting internal wall (5), wherein there are contained in one compartment the cooling accumulator (4) and in the other compartment a soft foamed material block (3) including recesses (2) into which the final containers with the medicines are insertable, and that the external walls (1) of the cooling box are made of the composite material.

4. A cooling box according to claim 3, characterised in that the external walls (1) of the cooling box are comprised of a mirror-inverted double layer of the composite material.

5. A cooling box according to claim 3, characterised in that the thermally conducting internal wall (5) is made of a flexible composite material having a thermal conductivity of from 0.02 to 0.06 W/m.K at a layer thickness of from 3 to 5 mm.

6. A cooling box according to claims 3 and 5, characterised in that the thermally conducting internal wall (5) is made of a flexible composite material including the following layers:
- a polyethylene layer having an area weight of from 20 to 60 g/m² (5c),
- a tissue of synthetic or natural fibres, preferably polyolefine ribbons (5b),
- a foamed material (5a),
- a tissue of synthetic or natural fibres, preferably of polyolefine ribbons (5b), as well as
- a polyetheylene layer having an area weight of from 20 to 60 g/m² (5c).

7. A cooling box according to claims 3 to 6, characterised in that the compartment receiving the foamed material block (3) comprises a lid (6) to be closed by a zip fastener (7), the hinge (8) between the lid (6) and the side wall being likewisely made of the heat-insulating and heat-reflecting external-wall composite material.

8. A cooling box according to claims 3 to 7, characterised in that the edges of the walls are stitched and the edges of the external walls (1) are covered by a riding strap (11).

9. A cooling box according to claims 3 to 8, characterised in that the compartment for the cooling accumulator (4) is accessible through a slot to be closed by a zip fastener (9).

10. A cooling bag (13) for a folding stool (15) comprising two rotatably connected metal frames (17, 17') and a cloth cover (14), characterised in that the cloth cover (14) of the stool (15) and the walls of the cooling bag (13) are made of a composite material (1) according to claim 1 or 2, that fastening means (18, 18') are provided on two opposite sides of the cloth cover, which cooperate with retaining means (19, 19') fastened to opposite side wall parts of the cooling bag, and that at least one closeable opening is provided in the upper region of the side walls of the cooling bag (13).

11. A cooling bag according to claim 10, characterised in that additional suspension means (21, 22, 21', 22') are fastened to the side walls and are connectable with a carrying belt.

FIG.2

FIG.1

FIG.3

FIG.4

FIG.5

## FIG.6